# EUROPÄISCHE PATENTSCHRIFT

(11) **EP 2 989 946 B1**
(45) Veröffentlichungstag und Bekanntmachung des Hinweises auf die Patenterteilung: **21.06.2017**
(21) Anmeldenummer: 15183637.6
(22) Anmeldetag: 06.02.2013
(51) Int. Cl.: A47J 37/07

(54) **GRILL**
GRILL
GRIL

(30) Priorität: 19.12.2012 DE 102012223852
(43) Veröffentlichungstag der Anmeldung: 02.03.2016
(62) Teilanmeldung aus: 13710782.7
(73) Patentinhaber: Lotusgrill GmbH, 67117 Limburgerhof (DE)
(72) Erfinder: Ohler, Hans, 67117 Limburgerhof (DE); Paakkanen, Harri, 69126 Heidelberg (DE)
(74) Vertreter: Patent- und Rechtsanwälte Ullrich & Naumann

(56) Entgegenhaltungen:
- EP-A1- 1 838 187
- DE-U1-202004 017 817
- GB-A- 2 465 880
- US-A- 4 510 916
- US-A1- 2009 025 574
- US-A1- 2009 056 695

## Beschreibung

Die Erfindung betrifft einen Grill mit einem Gehäuse, einer innerhalb des Gehäuses allseitig mit Abstand zum Gehäuse angeordneten Trägerschale, einer in der Trägerschale stehenden Holzkohlekammer, einem oberhalb der Holzkohlekammer angeordneten Grillrost und einer Luftversorgungseinrichtung, die von unterhalb der Trägerschale einen in die Holzkohlekammer gerichteten Luftstrom erzeugt.

Entsprechend den gattungsbildenden Merkmalen handelt es sich um einen Holzkohlegrill, der sich aufgrund seiner besonderen Konstruktion und Ausstattung ganz besonders als Tischgrill eignet. Lediglich beispielhaft sei dazu auf die EP 1 838 187 A1 verwiesen.

Für den bekannten Holzkohlegrill ist wesentlich, dass er innerhalb eines Gehäuses eine Holzkohlekammer für glühende Holzkohle aufweist, wobei die Holzkohlekammer mit einer siebartigen Abdeckung im Sinne einer feinmaschigen Auflage versehen ist. Die Holzkohleschale ist mit einer geschlossenen Wandung ausgestattet und wird über eine zentrische, kegelförmige Aufwölbung und eine darin angeordneten Lochung von unten her mit Verbrennungsluft versorgt.

Die aus dem Stand der Technik bekannte Holzkohlekammer ist in mehrerlei Hinsicht problematisch. Sie ist im Wesentlichen geeignet zur Wärmeabstrahlung nach oben, nämlich durch ein abdeckendes Flammsieb hindurch. Aufgrund der schalenförmigen Ausbildung der Holzkohlekammer reflektiert sie im Wesentlichen die Wärmestrahlung nach oben, wodurch die wirksame Fläche ganz erheblich reduziert ist. Außerdem droht das Flammsieb aufgrund der filigranen Ausgestaltung insbesondere nach mehreren Heizzyklen zu brechen bzw. spröde zu werden. Schließlich ist die bekannte Holzkohlekammer aufgrund ihrer spezifischen Konstruktion nicht zum Transport innerhalb des Grills geeignet, zumal der Deckel der Holzkohlekammer, auch wenn Klammern zur Befestigung des Deckels vorgesehen sind, nicht zuverlässig hält.

Aus der DE 20 2004 017 817 U1 ist ein ähnlicher Grill bekannt, der in Bezug auf das Verstellen bzw. Positionieren bei mit Glut beladener Holzkohlekammer die gleichen Nachteile aufweist, da auch dort die Holzkohlekammer mehr oder weniger lose in einer Trägerschale im Inneren des Grills steht. Die Anordnung ist instabil, ja gerade zu wackelig, so dass eine Umpositionierung des Grills während des Grillbetriebs ausgeschlossen ist.

Im Lichte der voranstehenden Ausführungen liegt der Erfindung die Aufgabe zugrunde, den gattungsbildenden Grill derart auszugestalten und weiterzubilden, dass er sich bei einfachster Konstruktion zur gefahrlosen Handhabung eignet, insbesondere auch zum Verstellen bzw. Positionieren bei mit Glut beladener Holzkohlekammer.

Voranstehende Aufgabe ist durch die Merkmale des Patentanspruchs 1 gelöst. Danach ist der gattungsbildende Grill dadurch gekennzeichnet, dass die Holzkohlekammer im Wesentlichen zylindrisch ausgebildet ist und einen abnehmbaren Deckel umfasst, der in seiner Fläche gelocht ist.

Erfindungsgemäß ist erkannt worden, dass sich eine zylindrisch ausgeführte Holzkohlekammer ganz besonders eignet, da diese die Wärme einerseits nach oben und andererseits durch deren Wandung hindurch zur Seite hin abstrahlt. Die Wärmestrahlung nach oben ist ganz besonders dadurch begünstigt, dass der abnehmbare Deckel in seiner Fläche gelocht ist, wobei die Lochung gerade so groß ausgeführt ist, dass Wärmestrahlung ungehindert durch die Lochung hindurchtreten kann, jedoch die Glut im Inneren der Holzkohlekammer verbleibt, auch für den Fall, dass der Grill unsachgerecht gekippt wird oder sogar umfällt. Insoweit muss gewährleistet sein, dass der abnehmbare Deckel in seiner die Holzkohlekammer schließenden Position, d.h. auf den oberen Rand der Holzkohlekammer aufgesetzt, durch mechanische Mittel fixiert ist.

In vorteilhafter Ausgestaltung hat die Lochung des Deckels vorzugsweise identische Durchgänge, bspw. mit einem Durchmesser im Bereich von 3mm bis 9mm, vorzugsweise mit einem Durchmesser von 6mm. Durch diese Maßnahme kann hinreichend viel Wärmestrahlung nach oben austreten, ist jedoch der ungewollte Austritt von glühenden Bestandteilen der Holzkohle wirksam vermieden, auch für den Fall, dass der gesamte Grill mit der Holzkohlekammer gekippt wird.

In ganz besonders vorteilhafter Weise umfasst die Lochung mindestens zwei kreisringförmig angeordnete Lochgruppen, wobei die so gebildeten Kreisringe koaxial zueinander angeordnet sein können.

Der Deckel kann mindestens zwei Flächen mit unterschiedlichem axialem Abstand zum Deckelrand aufweisen, wobei den unterschiedlichen Flächen die jeweilige Lochgruppe zugeordnet ist. Entsprechend befindet sich in jeder Ebene des Deckels eine Lochgruppe, wobei die Löcher bzw. Durchgänge äquidistant zueinander ausgebildet sein können.

Im Konkreten kann der Deckel zwischen den Flächen und ggf. an seinem Randbereich nach unten abgewinkelte bzw. geneigte Übergangsflächen aufweisen, entlang derer auf den Deckel tropfendes Fett zur Seite hin nach unten ablaufen kann. Dadurch ist in Bezug auf die zu vermeidende Verbrennung von Fett eine wirksame Barriere geschaffen, wobei weitere Maßnahmen später noch erläutert werden.

Der Deckel ist derart ausgestaltet und dimensioniert, dass er mit seinem Randbereich die Holzkohlekammer in deren oberen Bereich übergreift bzw. umschließt. Es kann sich bei dem Deckel um eine Art Stülpdeckel handeln, wobei der Deckel auf den oberen Randbereich der Holzkohlekammer aufdrückbar oder aufpressbar ist. Auch ein Einrasten wäre bei wulstartiger Ausgestaltung des oberen Randbereichs der Holzkohlekammer und bei entsprechender Ausgestaltung des übergreifenden Randes des Deckels denkbar.

In ganz besonders vorteilhafter Weise umfasst der Deckel einen oberen, vorzugsweise auch als Henkel dienenden Klemmbügel mit einer zumindest gewissen Elastizität, der zum Klemmen und Festlegen der geschlossenen Holzkohlekammer zwischen dem Bodenbereich der Trägerschale und dem Grillrost dient. Mit anderen Worten wird durch Aufsetzen bzw. Festlegen des Grillrosts die Holzkohlekammer festgelegt, wobei dem Klemmbügel eine spannende Funktion zukommt. Durch diese Maßnahme ist die Holzkohlekammer im geschlossenen Zustand gesichert, so dass ein unbeabsichtigtes Herausfallen glühender Holzkohle auch dann ausgeschlossen ist, wenn der gesamte Grill kippt. Ein hohes Maß an Sicherheit ist realisiert.

Zur abermaligen Begünstigung des Wirkungsgrades der als Brennkammer dienenden Holzkohlekammer ist der Boden der Holzkohlekammer gelocht, so dass diese von unten her über eine Anzündhilfe befeuert werden und nach der Befeuerung ziehen kann. Auch diese Lochung kann mindestens zwei kreisringförmig angeordnete Lochgruppen umfassen, ähnlich wie bei dem Deckel. Die so gebildeten Kreisringe sind ebenso koaxial zueinander angeordnet. Aufgrund dieser Maßnahme ist die Holzkohlekammer in idealer Weise auch zum Anfeuern der Holzkohle geeignet, zumal von unterhalb der Holzkohlekammer ein Anzünden mittels Anzündhilfe möglich ist. Jedenfalls dient die Lochung im Bodenbereich der Holzkohlekammer einerseits zum Anzünden der in der Holzkohlekammer befindlichen Holzkohle und andererseits zur Luftversorgung des Innenraums der Holzkohlekammer.

In konstruktiver Hinsicht ist es in Bezug auf die Holzkohlekammer von Vorteil, wenn der Boden gegenüber einem über den Boden hinaus ragenden freien Rand zumindest geringfügig nach innen verlagert ist und wenn der Rand mit einem umlaufenden, nach außen abragenden Flansch, einer Auskragung, etc. endet. Durch diese Maßnahme kommt die Holzkohlekammer nicht etwa mit dem Bodenbereich unmittelbar auf einer Unterlage zum Stehen, steht vielmehr mit dem freien Rand auf der Unterlage, und zwar unter Bildung eines als Anzündraum dienenden Raums zwischen der Unterlage und dem Bodenbereich.

Zur Stabilisierung des die Holzkohlekammer bildenden Körpers ist der untere und/oder der obere Rand der Holzkohlekammer durch Falzen, Börteln, etc. verstärkt. Auch ist es denkbar, dass die Randbereiche einen angeformten, verstärkten Metallrand aufweisen.

Die Wandung der Holzkohlekammer sollte ebenso zur hinreichend guten Abstrahlung von Wärme geeignet sein. Dazu ist die Wandung als umlaufendes, vorzugsweise feinmaschiges Sieb ausgeführt, so dass eine allseitige Wärmeabstrahlung nahezu ungehindert möglich ist. Bei dem Sieb sollte es sich um ein qualitativ hochwertiges Sieb aus Edelstahl handeln, welches für hinreichend langen Gebrauch geeignet ist.

In Bezug auf die Holzkohlekammer sei zusammenfassend festgehalten, dass diese in ganz besonders vorteilhafter Weise über eine umlaufende Siebwandung verfügt, wobei der mit der umlaufenden Siebwandung fest verbundene Bodenbereich nach innen in die Holzkohlekammer hinreinragt und nach unten einen Raum definiert. Außerdem ist der Bodenbereich der Holzkohlekammer gelocht, so dass eine darunter angeordnete Anzündhilfe in die Holzkohlekammer hinein wirken kann. Obendrein ist die Luftströmung in die Holzkohlekammer hinein begünstigt.

Ähnlich verhält es sich mit dem Deckel, der zwar die Holzkohlekammer sicher abschließt, jedoch aufgrund der dort vorgesehenen Lochung in idealer Weise eine nahezu freie Wärmeabstrahlung nach oben zulässt. Durch die Summe aller die Holzkohlekammer betreffenden Maßnahmen ist der Wirkungsgrad begünstigt.

Wie bereits zuvor erwähnt, wird die Holzkohlekammer auf eine Unterlage gestellt, wobei es sich dabei in vorteilhafter Weise um eine Anzündschale handelt, auf die die Holzkohlekammer mit ihrem unteren Rand steht. Der Raum zwischen dem Boden der Anzündschale und dem nach innen versetzten Boden der Holzkohlekammer dient zum Beladen mit einer vorzugsweise pastösen Anzündhilfe, die im eingesetzten Zustand der Anzündschale in der Trägerschale entzündet wird. Danach wird die Holzkohlekammer auf bzw. in die Anzündschale gestellt und dort entsprechend der zuvor beschriebenen Klemmung festgelegt.

Zur idealen Positionierung der Anzündschale umfasst diese mindestens drei nach unten abragende Stellfüße, mit denen sie auf dem Boden der Trägerschale steht. Andere Positioniermechanismen sind realisierbar.

Zur Begünstigung bzw. Sicherung einer geeigneten Luftströmung ist im Bodenbereich der Anzündschale, vorzugsweise mittig, ein Lufteinlass zum Einleiten der von der Luftversorgungseinrichtung kommenden Luft vorgesehen. Der Lufteinlass ragt vorzugsweise mittels eines vom Bodenbereich nach oben abragenden Flanschs, Rands oder dgl. in die Anzündschale hinein, so dass von dort aus ein Hineingleiten einer pastösen Anzündhilfe in Richtung der Luftversorgungseinrichtung wirksam verhindert ist.

Das Gehäuse ist in seinem unteren Bereich in vorteilhafter Weise mit einem Innenboden ausgestattet, der in das Gehäuse eingeschweißt sein kann. Die Luftversorgungseinrichtung kann ein Lufteinlassrohr umfassen, welches sich von unterhalb des Innenbodens durch diesen hindurch oder mit diesem integral ausgebildet durch die Trägerschale und durch den Boden der Anzündhilfe hindurch in den Bereich der Anzündhilfe hinein erstreckt. Auf das Lufteinlassrohr kann die Trägerschale und die Anzündschale aufgeschoben bzw. aufgesteckt sein, so dass das Lufteinlassrohr gleichzeitig zur eindeutigen Positionierung der Trägerschale und der Anzündschale dient.

Unterhalb des Innenbodens, nahe des Einlasses des Lufteinlassrohres, kann ein Ventilator bzw. ein Gebläse angeordnet sein. Der Ventilator bläst geregelt Luft in das Lufteinlassrohr, je nach Bedarf bzw. je nach Einstellung.

Bei dem Ventilator handelt es sich um ein miniaturisiertes Aggregat mit äußerst geringem Stromverbrauch, ähnlich oder identisch dem Ventilator im Gehäuse eines Computers. Außerdem arbeitet der Ventilator nahezu geräuschlos.

In ganz besonders vorteilhafter Weise ist eine Regelung für den Betrieb des Ventilators vorgesehen, die den Ventilator bei Erreichen einer vorzugsweise oberhalb des Grillrosts detektierbaren Betriebstemperatur herunterregelt.

Unterhalb des Innenbodens des Gehäuses kann ein Schalter, ein Regler und ein Batteriefach mit mindestens einer Batterie oder einem Akku zur Stromversorgung für das Gebläse angeordnet sein. Der Schalter und der Regler sitzen in vorteilhafter Weise zur Betätigung von außen in der Gehäusewand. Das Batteriefach ist von außerhalb des Gehäuses zugänglich, vorzugsweise von unterhalb des Gehäuses über eine dort vorgesehene Klappe.

Zur Begünstigung der Luftströmung über die Anzündschale in die Holzkohlekammer hinein weist das Gehäuse im Bereich unterhalb des Innenbodens zur Luftzufuhr dienende Öffnungen, vorzugsweise in Form dekorativer Durchgänge, bspw. in Form schlitzartiger Öffnungen, auf. Bei entsprechender Positionierung des Ventilators wird von außerhalb des Gehäuses Luft angesaugt und in den Lufteinlass bzw. in das Lufteinlassrohr bis in die Holzkohlekammer hinein geblasen. Der Lufteinlass kann Teil bzw. integrierter Bestandteil eines Ventilatorgehäuses sein.

Auch ist es denkbar, dass das Gehäuse im Bereich oberhalb des Innenbodens zur Kühlung im Bereich zwischen dem Gehäuse und der Trägerschale dienende Öffnungen, vorzugsweise in Form dekorativer Durchgänge bzw. Schlitze über den gesamten Umfang des Gehäuses hinweg aufweist, so dass die Außenwandung des Gehäuses weitestgehend von der Holzkohlekammer temperaturentkoppelt ist, nämlich einerseits aufgrund der Zwischenschaltung der von innen wärmereflektierenden Trägerschale und andererseits aufgrund des Luftraums zwischen der Trägerschale und dem Gehäuse. Auch ist es denkbar, dass der Innenboden gelocht, geschlitzt oder sonstwie durchgängig ausgeführt ist, so dass über den Ventilator auch Luft in den Bereich zwischen der Trägerschale und dem Gehäuse gesaugt oder geblasen werden kann, und von dem Zwischenraum aus in den Bereich unter den Innenboden und von dort aus durch das Lufteinlassrohr in die Holzkohlekammer gelangen kann. Auch diese Maßnahme begünstigt die Kühlung und somit eine unerwünschte Wärmeübertragung auf das Gehäuse.

In Bezug auf den Grillrost, insbesondere in Bezug auf dessen sichere Positionierung, ist es von Vorteil, wenn dieser zum Einstecken in Öffnungen im oberen Rand der Trägerschale oder im Gehäuse dienende Steckfüße aufweist, so dass eine feste Anbringung des Grillrosts am Gehäuse möglich ist. Der Grillrost selbst kann in seinem Randbereich, zumindest geringfügig oberhalb der eigentlichen Grillfläche, eine umlaufende Reling aufweisen, wobei durch diese Maßnahme ein Herunterfallen von Grillgut wirksam verhindert ist. Eine weitere Sicherheitsmaßnahme ist so geschaffen.

In Bezug auf die Festlegung des Grillrosts ist es von Vorteil, wenn dieser klemmend am Gehäusrand festlegbar ist, vorzugsweise mittels Spannmitteln, die vorzugsweise aus Metall ausgeführt sind. Bei den Spannmitteln kann es sich um Spannklammern oder dgl. handeln, wodurch ein sicheres Festlegen des Grillrosts möglich ist. Wie bereits zuvor ausgeführt, übt beim Festspannen des Grillrosts dieser eine klemmende Wirkung auf den Deckel der Holzkohlekammer aus, so dass die Holzkohlekammer wirksam zwischen der Trägerschale und dem Grillrost festgelegt ist.

In weiter vorteilhafter Weise weist der Grillrost eine mittige geschlossene, vorzugsweise gewellte Grillfläche auf. Diese Grillfläche kann wiederum einen nach außen abfallenden Tropfrand oder zumindest eine Tropfnase aufweisen, der bzw. die im Durchmesser zumindest geringfügig größer ist als der Durchmesser der Holzkohlekammer. Letztendlich überragt die geschlossene Grillfläche bei mittiger Anordnung auf bzw. im Grillrost die darunter ebenfalls mittig angeordnete Holzkohlekammer, so dass durch diese Maßnahme ein Auftropfen von Fett auf den Deckel der Holzkohlekammer zumindest weitestgehend vermieden ist. Tropfendes Fett fällt somit seitlich neben die Holzkohlekammer und kann in der Trägerschale zusammenlaufen.

Zur Begünstigung des Sammelns tropfenden Fetts ist die Trägerschale vorzugsweise mit einem zumindest teilweise umlaufenden Randbereich in das Gehäuse eingehängt, wobei der Bodenbereich der Trägerschale zu einem äußeren Randbereich abfällt und dort einen Sammelbereich für tropfendes Fett bildet. Bei der Ausgestaltung der Trägerschale aus Edelstahl lässt sich die Trägerschale einfach aus dem Gehäuse entnehmen und kann in einer Spülmaschine gereinigt werden, wie auch die anderen Bestandteile des Grills.

Auch das Gehäuse kann im Wesentlichen aus Metall bestehen, wobei der Bodenbereich unterhalb des Innenbodens ohne Weiteres auch aus Kunststoff hergestellt sein kann. Beide Bereiche können miteinander verpresst, verschraubt, verklebt oder sonstwie miteinander verbunden sein.

Auch ist es denkbar, das metallische Gehäuse zumindest außen durch Pulverbeschichtung bzw. Pulverlackierung zu veredeln. Beliebige Farbgebungen sind denkbar.

Schließlich ist es von Vorteil, die Trägerschale und/oder die Holzkohlekammer (insgesamt) und/oder die Anzündschale und/oder den Grillrost aus Edelstahl herzustellen, nämlich zur Realisierung einer Langlebigkeit und zum Zwecke der einfachen Reinigung, möglichst in einer Geschirrspülmaschine.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Sprengdarstellung die wesentlichen "äußeren" Bestandteile des erfindungsgemäßen Grills,
- Fig. 2: in einer schematischen Sprengdarstellung die wesentlichen "inneren" Bestandteile des erfindungsgemäßen Grills,
- Fig. 3: in einer schematischen Seitenansicht, geschnitten und teilweise weggebrochen, den erfindungsgemäßen Grill mit den wesentlichen Bestandteilen im zusammengebauten Zustand,
- Fig. 4: in schematischen Ansichten von unten, schräg von unten und von der Seite ein Ausführungsbeispiel der Holzkohlekammer für den erfindungsgemäßen Grill und
- Fig. 5: in einer schematischen Ansicht, Draufsicht und Seitenansicht ein Ausführungsbeispiel eines Deckels zum Verschließen der Holzkohlekammer nach Fig. 4.

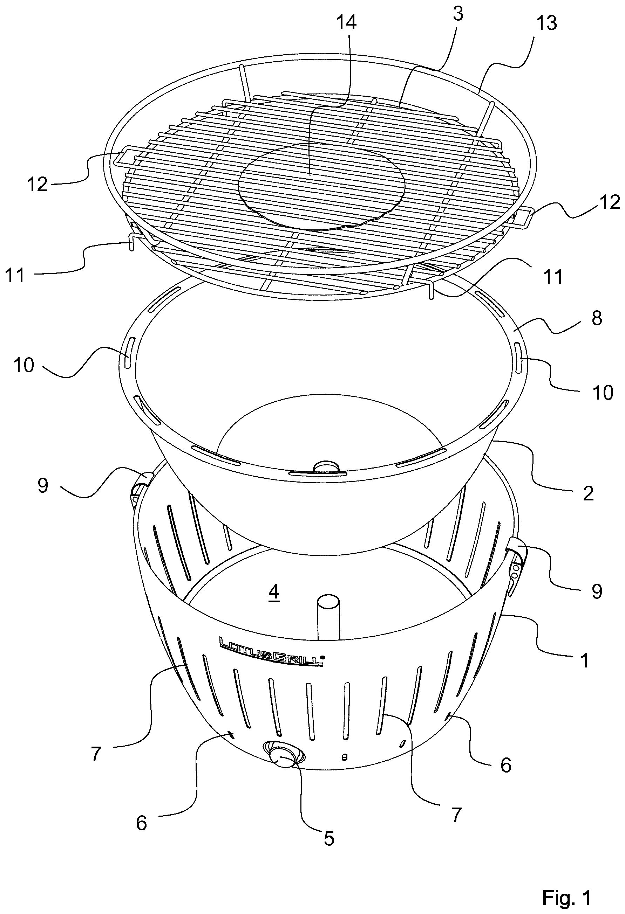

Fig. 1 zeigt in einer schematischen Sprengdarstellung die "äußeren" Bestandteile des erfindungsgemäßen Grills, nämlich, von unten beginnend, das Gehäuse 1, die in das Gehäuse 1 einsetzbare Trägerschale 2 und den darüber anordenbaren Grillrost 3.

Des Weiteren lässt Fig. 1 erkennen, dass das Gehäuse 1 im unteren Bereich einen Innenboden 4 im Sinne eines Zwischenbodens aufweist, unter dem elektrische Komponenten angeordnet sind. Von außerhalb des Gehäuses 1 ist ein Drehknopf 5 erkennbar, der zum Ein- und Ausschalten sowie zur Regulierung eines unter dem Innenboden 4 angeordneten Gebläses dient.

In der Wandung des Gehäuses 1 sind untere Durchgänge 6 vorgesehen, die zum Ansaugen von Außenluft dienen. Obere Durchgänge 7 dienen zur Hinterlüftung des Raums zwischen der Trägerschale 2 und dem Gehäuse 1.

Die Trägerschale 2 wird mit ihrem Randbereich 8 auf den freien Rand des Gehäuses 1 aufgesetzt und dort mittels Spannvorrichtung 9, die am Grillrost 3 angreifen, festgelegt. Letztendlich handelt es sich bei der Spannvorrichtung 9 um beidseitig angreifende Klammern, die den Grillrost 3 und somit auch die Trägerschale 2 fest mit dem Gehäuse 1 verbinden.

Im Randbereich 8 der Trägerschale 2 sind Ausnehmungen 10 vorgesehen, die zum positionierenden Einstecken von Füßen 11 des Grillrosts 3 dienen. Durch diese Maßnahme lässt sich der Grillrost 3 in idealer Weise positionieren, wobei die Spannvorrichtungen 9 bzw. die dort vorgesehenen Spannklammern in seitliche Befestigungslaschen 12 am Grillrost 3 greifen. Durch Spannen der Spannvorrichtungen 9 wird der Grillrost 3 fest mit dem Gehäuse 1 verbunden, und zwar unter Zwischenschaltung der Trägerschale 2, die dabei gleichermaßen fixiert wird. In der zusammengebauten Position ist zwischen dem Gehäuse 1 und der Trägerschale 2 ein wärmeisolierender Luftraum geschaffen, der über die oberen Durchgänge 7 hinterlüftet ist.

Der Grillrost 3 umfasst eine umlaufende Reling 13 und ist mittig mit einer geschlossenen, gewellten Grillfläche 14 versehen, deren Randbereich zum Abtropfen von Fett zumindest geringfügig nach unten abfallend ausgebildet sein kann.

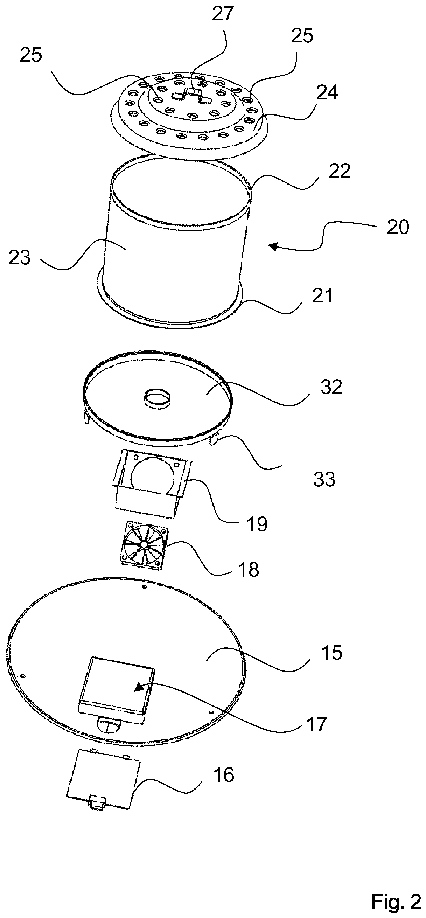

Fig. 2 zeigt in einer schematischen Sprengdarstellung die wesentlichen "inneren" Bestandteile des erfindungsgemäßen Grills, nämlich, von unten beginnend, einen das Gehäuse 1 nach unten abschließenden Boden 15, der mit einer Öffnungsklappe 16 zum Einstecken und Herausnehmen von Batterien 17 ausgestattet ist. Die Batterien 17 dienen zur Stromversorgung eines Ventilators 18, der in einem Ventilatorgehäuse 19 angeordnet ist.

Des Weiteren zeigt Fig. 2 die erfindungsgemäß innerhalb des Grills vorgesehene Holzkohlekammer 20, die einen unteren abgeflanschten Randbereich 21 und einen oberen verstärkten Randbereich 22 hat. Dazwischen erstreckt sich eine besondere Wandung 23, die als feinmaschiges Sieb aus Edelstahl ausgeführt ist.

Die Holzkohlekammer 20 ist mit einem Deckel 24 ausgestattet, der zwei planparallele Flächen mit unterschiedlichem axialen Abstand zum Deckelrand aufweist. In den Flächen sind Lochgruppen 25 konzentrisch zueinander ausgebildet. Außerdem ist der Deckel 24 mit schrägen bzw. abfallenden Flächen im Übergang zwischen den die Lochgruppen 25 umfassenden Flächen und im Randbereich ausgestattet, die zum Ablaufen bzw. Abtropfen von Fett dienen.

Des Weiteren ist der Deckel 24 mit einem Henkel 27 ausgestattet, der im zusammengebauten Zustand des Grills als Klemmbügel dient, nämlich zum klemmenden Festlegen der geschlossenen Holzkohlekammer 20 zwischen dem Bodenbereich der Trägerschale 2 und dem Grillrost 3.

Auf die Anzündschale wird später eingegangen werden.

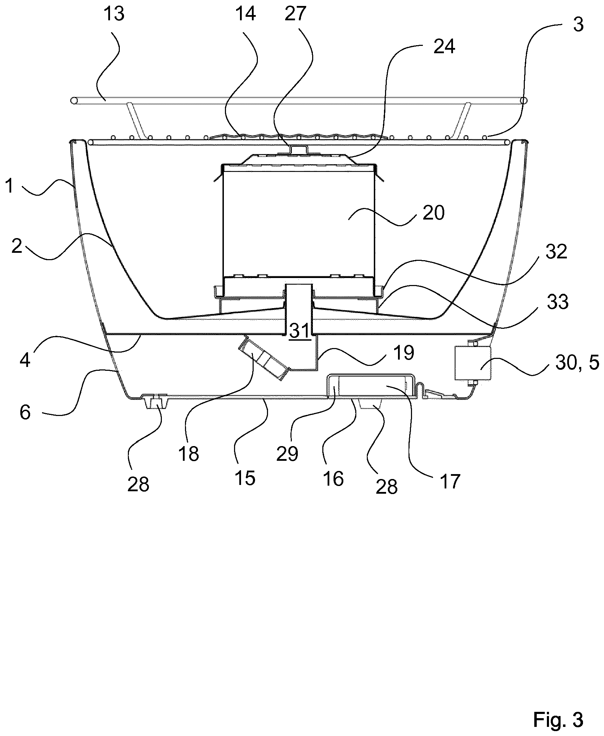

Fig. 3 zeigt den erfindungsgemäßen Grill in einer zusammengebauten Ansicht, im Schnitt.

Von unten beginnend ist das Gehäuse 1 durch den Boden 15 geschlossen, wobei zum Positionieren des Gehäuses 1 bzw. des Grills Füße 28 vorgesehen sind. Der Boden 15 ist verschraubt oder verrastet, lässt sich jedenfalls vom Gehäuse 1 entfernen bzw. abnehmen.

Im Boden 15 ist die Öffnungsklappe 16 vorgesehen, über die ein Batteriefach 29 öffenbar ist. Im Batteriefach 29 befinden sich die Batterien 17.

Die Stromversorgung des Ventilators 18 erfolgt über die Batterien 17, wobei ein Schalter bzw. Regler 30 zwischengeschaltet ist, der den als Schalter dienenden Drehknopf 5 umfasst. Grundsätzlich ist die Drehzahl des Ventilators 18 manuell einstellbar.

Fig. 3 zeigt des Weiteren, dass der Ventilator 18 innerhalb eines Ventilatorgehäuses 19 angeordnet ist, wodurch durch untere Durchgänge 6 in das Gehäuse 1 einströmende Luft in ein Lufteinlassrohr 31 geleitet wird. Das Lufteinlassrohr 31 bzw. der so gebildete Lufteinlass erstreckt sich durch den Innenboden 4 hindurch, durch einen mittigen Durchgang in der Trägerschale 2 in einen Raum unterhalb der Holzkohlekammer 20, die in einer Anzündschale 32 steht, nämlich mit angeformten Füßen 33 auf dem Bodenbereich der Trägerschale 2. Angesaugte bzw. durch das Lufteinlassrohr 31 geblasene Luft dient zur Brennluftversorgung einer in der Anzündschale 32 befindlichen Anzündhilfe, vorzugsweise aus pastösem Material. Entsprechend wird die in der Holzkohlekammer 20 befindliche Holzkohle vermittels der Hitzeentwicklung in der Anzündschale 32 entzündet, begünstigt durch die Luftzufuhr, so dass ein schnelles Entfachen der darüber befindlichen Holzkohle realisierbar ist.

Die Holzkohlekammer 20 ist entsprechend der Darstellung in Fig. 3 mit dem Deckel 24 geschlossen, der im Sinne eines Stülpverschlusses auf der Holzkohlekammer 20 sitzt. Über den federnd wirkenden Henkel 27 ist die Holzkohlekammer 20 zwischen der Trägerschale 2 und dem Grillrost 3 festgelegt, so dass in zusammengebautem Zustand eine sichere Anordnung der Holzkohlekammer 20, im verschlossenen Zustand, gewährleistet ist.

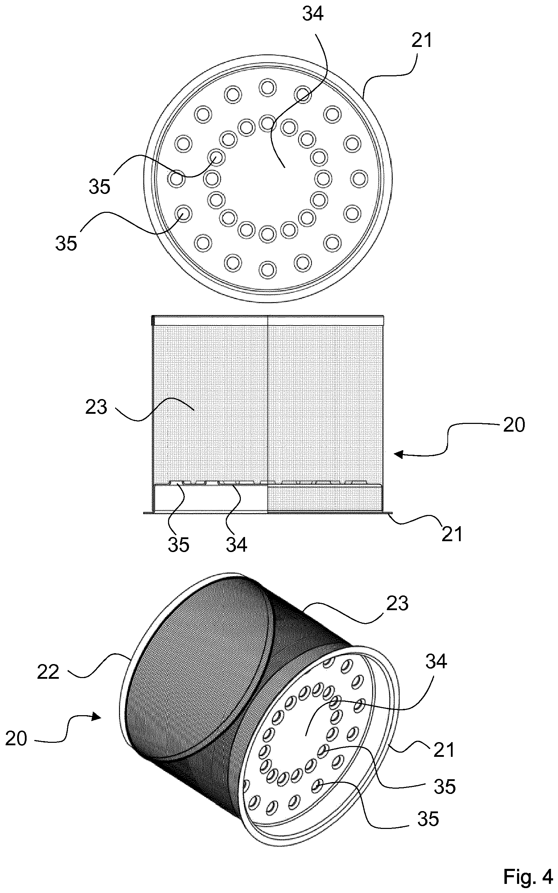

Als oberer Abschluss ist der Grillrost 3 mit umlaufender Reling 13 angeordnet, wobei der Grillrost 3 im mittigen Bereich eine geschlossene Grillfläche 14 aufweist. Fig. 4 zeigt die Holzkohlekammer 20 im Detail, wonach diese einen geflanschten unteren Randbereich 21 mit gelochtem Boden 34 aufweist. Die Durchgänge bzw. Lochgruppen 35 im Boden 34 der Holzkohlekammer 20 dient zum besseren Anfeuern der Holzkohle von unten, d.h. zum Anfeuern über die Anzündhilfe, die sich im zusammengebauten Zustand darunter in der Anzündschale 32 (vgl. Fig. 3) befindet.

Die Wandung 23 der Holzkohlekammer 20 besteht aus einem feinmaschigen Sieb aus Edelstahl. Nach oben hin ist die Wandung 23 durch einen metallverstärkten, vorzugsweise umbörtelten Randbereich 22 abgeschlossen.

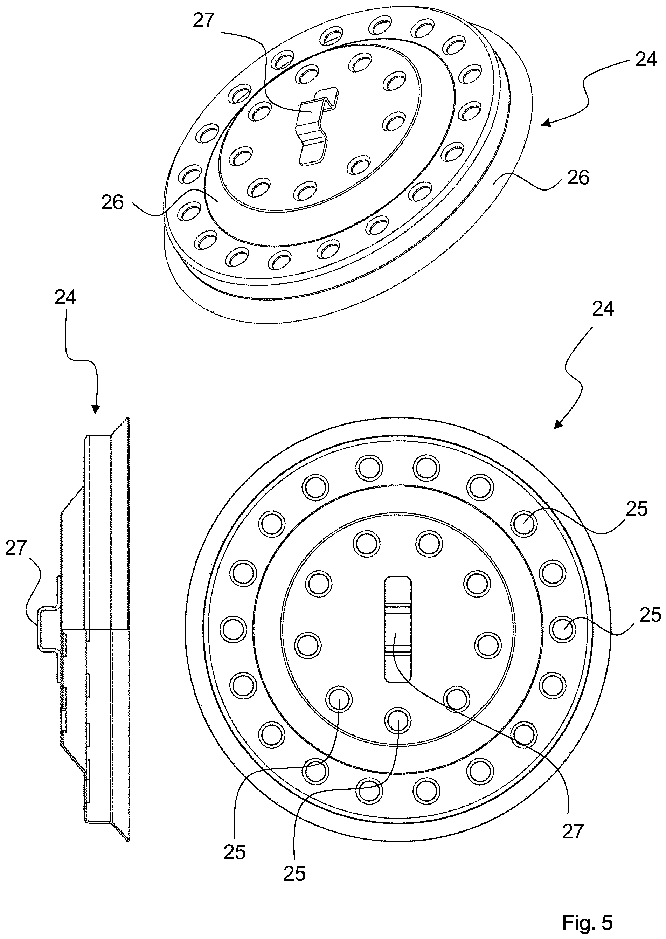

Fig. 5 zeigt den Deckel 24, mit dem die Holzkohlekammer 20 im Sinne eines Stülpverschlusses verschließbar ist. Die Lochgruppen 25 sind unterschiedlichen Flächen des Deckels 24 zugeordnet, wobei zwischen den Flächen eine abfallende Fläche sowie ein äußerer abfallenden Rand 26 vorgesehen sind. Der mittige Henkel 27 dient einerseits zur Handhabung und andererseits zum Verspannen gegenüber dem Grillrost 3. Auch der Deckel 24 ist vorzugsweise aus Edelstahl hergestellt.

Hinsichtlich weiterer vorteilhafter Ausgestaltungen des erfindungsgemäßen Grills wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel des erfindungsgemäßen Grills lediglich zur Erörterung der beanspruchten Lehre dient, diese jedoch nicht auf das Ausführungsbeispiel einschränkt.

### Bezugszeichenliste

- 1: Gehäuse
- 2: Trägerschale
- 3: Grillrost
- 4: Innenboden (des Gehäuses)
- 5: Drehknopf (des Schalters/Reglers)
- 6: unterer Durchgang (in der Wandung des Gehäuses)
- 7: oberer Durchgang (in der Wandung des Gehäuses)
- 8: Randbereich (der Trägerschale)
- 9: Spannvorrichtung (zum Verspannen des Grillrosts am Gehäuse)
- 10: Ausnehmung im oberen Randbereich der Trägerschale zum Einstecken von Füßen des Grillrosts
- 11: Fuß am Grillrost
- 12: Befestigungslasche am Grillrost
- 13: Reling am Grillrost
- 14: Grillfläche, mittig auf dem Grillrost
- 15: Boden (unterer Boden des Gehäuses)
- 16: Öffnungsklappe im Boden des Gehäuses
- 17: Batterien im Batteriefach
- 18: Ventilator
- 19: Ventilatorgehäuse
- 20: Holzkohlekammer
- 21: geflanschter unterer Randbereich der Holzkohlekammer
- 22: oberer verstärkter Randbereich der Holzkohlekammer
- 23: Wandung der Holzkohlekammer, Sieb
- 24: Deckel der Holzkohlekammer
- 25: Lochgruppe im Deckel
- 26: abfallende, schräge Fläche am Deckel
- 27: Henkel am Deckel
- 28: Fuß des Gehäuses
- 29: Batteriefach im Boden des Gehäuses
- 30: Regler
- 31: Lufteinlassrohr
- 32: Anzündschale
- 33: Fuß der Anzündschale
- 34: Boden der Holzkohlekammer
- 35: Lochgruppe im Boden der Holzkohlekammer

## Patentansprüche

1. Grill mit einem Gehäuse (1), einer innerhalb des Gehäuses (1) allseitig mit Abstand zum Gehäuse (1) angeordneten Trägerschale (2), einer in der Trägerschale (2) stehenden Holzkohlekammer (20), einem oberhalb der Holzkohlekammer (20) angeordneten Grillrost (3) und einer Luftversorgungseinrichtung, die von unterhalb der Trägerschale (2) einen in die Holzkohlekammer (20) gerichteten Luftstrom erzeugt,
**dadurch gekennzeichnet, dass** die Holzkohlekammer (20) im Wesentlichen zylindrisch ausgeführt ist und einen abnehmbaren Deckel (24) umfasst, der in seiner Fläche gelocht ist, wobei der Deckel (24) in seiner die Holzkohlekammer (20) schließenden Position, d.h. auf den oberen Rand (22) der Holzkohlekammer (20) aufgesetzt, durch mechanische Mittel fixiert ist.

2. Grill nach Anspruch 1, **dadurch gekennzeichnet, dass** die Lochung des Deckels (24) vorzugsweise identische Durchgänge mit einem Durchmesser im Bereich von 3 bis 9 mm, vorzugsweise 6 mm, hat und/oder dass die Lochung mindestens zwei kreisringförmig angeordnete Lochgruppen (25) umfasst, wobei die so gebildeten Kreisringe koaxial zueinander angeordnet sind.

3. Grill nach einem der Ansprüche 1 bis 2, **dadurch gekennzeichnet, dass** der Deckel (24) mindestens zwei Flächen mit unterschiedlichem axialen Abstand zum Deckelrand aufweist und dass den unterschiedlichen Flächen die Lochgruppen (25) zugeordnet sind, wobei zwischen den Flächen und ggf. am Randbereich nach unten abgewinkelte bzw. geneigte Übergangsflächen ausgebildet sein können.

4. Grill nach einem der Ansprüche 1 bis 3, **dadurch gekennzeichnet, dass** der Deckel (24) mit seinem Randbereich die Holzkohlekammer (20) in deren oberem Bereich übergreift bzw. umschließt, wobei der Deckel (24) im Sinne eines Stülpverschlusses auf den oberen Randbereich (22) der Holzkohlekammer (20) aufdrückbar oder aufpreßbar sein kann.

5. Grill nach einem der Ansprüche 1 bis 4, **dadurch gekennzeichnet, dass** der Deckel (24) einen oberen, vorzugsweise auch als Henkel (27) dienenden Klemmbügel umfasst, der zum klemmenden Festlegen der geschlossenen Holzkohlekammer (20) zwischen dem Bodenbereich der Trägerschale (2) und dem Grillrost (3) dient.

6. Grill nach einem der Ansprüche 1 bis 5, **dadurch gekennzeichnet, dass** der Boden (34) der Holzkohlekammer (20) gelocht ist, wobei die Lochung mindestens zwei kreisringförmig angeordnete Lochgruppen (35), ähnlich wie bei dem Deckel (24), umfasst und wobei die so gebildeten Kreisringe koaxial zueinander angeordnet sind, wobei der Boden (34) über einen über den Boden hinausragenden freien Rand zumindest geringfügig nach innen verlagert sein kann und wobei der Rand mit einem umlaufenden, nach außen abragenden Flansch, einer Auskragung, etc. enden kann.

7. Grill nach einem der Ansprüche 1 bis 6, **dadurch gekennzeichnet, dass** der untere und/oder der obere Rand der Holzkohlekammer (20) durch Falzen, Bördeln, etc. verstärkt ist und/oder dass die Wandung der Holzkohlekammer (20) als umlaufendes, vorzugsweise feinmaschiges Sieb ausgeführt ist.

8. Grill nach einem der Ansprüche 1 bis 7, **dadurch gekennzeichnet, dass** die Holzkohlekammer (20) mit ihrem unteren Rand (21) in einer Anzündeschale (32) steht, wobei der Raum zwischen dem Boden der Anzündeschale (32) und dem Boden (34) der Holzkohlekammer (20) zum Beladen mit einer vorzugsweise pastösen Anzündhilfe dient, wobei die Anzündschale (32) mindestens drei nach unten abragende Stellfüße (33) umfassen kann, mit denen sie auf dem Boden der Trägerschale (2) steht und wobei im Bodenbereich der Anzündschale (32), vorzugsweise mittig, ein Lufteinlass (31) zum Einleiten der von der Luftversorgungseinrichtung kommenden Luft vorgesehen sein kann, wobei der Lufteinlass (31) vorzugsweise mittels eines vom Bodenbereich nach oben abragenden Flanschs, Rands oder dgl. in die Anzündschale (32) hinein ragt.

9. Grill nach einem der Ansprüche 1 bis 8, **dadurch gekennzeichnet, dass** die Luftversorgungseinrichtung ein von unterhalb eines im Gehäuse (1) ausgebildeten, vorzugsweise in das Gehäuse (1) eingeschweißten Innenbodens (4) durch diesen, die Trägerschale (2) und den Boden der Anzündschale (32) hindurch führendes Lufteinlassrohr (31) umfasst, auf das die Trägerschale (2) und die Anzündschale (32) aufgeschoben bzw. aufgesteckt sind.

10. Grill nach einem der Ansprüche 1 bis 9, **dadurch gekennzeichnet, dass** unterhalb des Innenbodens (4), nahe des Einlasses des Lufteinlassrohrs (31), ein Ventilator/Gebläse (18) angeordnet ist, der geregelt Luft in das Lufteinlassrohr (31) bläst, wobei der Ventilator (18) miniaturisiert und mit geringem Stromverbrauch ausgeführt sein kann, ähnlich oder identisch des Ventilators im Gehäuse eines Computers und wobei eine Regelung für den Betrieb des Ventilators (18) vorgesehen sein kann, die den Ventilator (18) bei Erreichen einer vorzugsweise oberhalb des Grillrosts (3) detektierbaren Betriebstemperatur herunterregelt.

11. Grill nach einem der Ansprüche 1 bis 10, **dadurch gekennzeichnet, dass** unterhalb des Innenbodens (4) des Gehäuses (1) ein Schalter, ein Regler (30) und ein Batteriefach (29) zur Stromversorgung für das Gebläse (18) angeordnet ist, wobei der Schalter und der Regler (30) in der Gehäusewand zum Zwecke der Betätigung von außen sitzt, und wobei das Batteriefach (29) von außen, vorzugsweise von unterhalb des Gehäuses (1), zugänglich ist.

12. Grill nach einem der Ansprüche 1 bis 11, **dadurch gekennzeichnet, dass** das Gehäuse (1) im Bereich unterhalb des Innenbodens (4) zur Luftzufuhr dienende Öffnungen, vorzugsweise in Form dekorativer Durchgänge, aufweist und/oder dass das Gehäuse (1) im Bereich oberhalb des Innenbodens (4) zur Kühlung im Bereich zwischen dem Gehäuse (1) und der Trägerschale (2) dienende Öffnungen, vorzugsweise in Form dekorativer Durchgänge, aufweist.

13. Grill nach einem der Ansprüche 1 bis 12, **dadurch gekennzeichnet, dass** der Grillrost (3) zur Positionierung, insbesondere zum Einstecken in Öffnungen im oberen Rand der Trägerschale (2) oder im Gehäuse (1) dienende Steckfüße (28) umfasst und/oder dass der Grillrost (3) in seinem Randbereich, zumindest geringfügig oberhalb der eigentlichen Grillfläche, eine umlaufende Reling (13) aufweist und/oder dass der Grillrost (3) klemmend am Gehäuserand festlegbar ist, vorzugsweise mittels Spannmitteln und/oder dass der Grillrost (3) eine mittige geschlossene, vorzugsweise gewellte Grillfläche mit umlaufendem, nach außen abfallendem Tropfrand aufweist, der im Durchmesser zumindest geringfügig größer ist als der Durchmesser der Holzkohlekammer (20).

14. Grill nach einem der Ansprüche 1 bis 13, **dadurch gekennzeichnet, dass** die Trägerschale (2) vorzugsweise mit einem zumindest teilweise umlaufenden Randbereich in das Gehäuse (1) eingehängt ist und dass der Bodenbereich der Trägerschale (2) zu einem äußeren Randbereich abfällt und dort einen Sammelbereich für heruntertropfendes Fett bildet.

15. Grill nach einem der Ansprüche 1 bis 14, **dadurch gekennzeichnet, dass** das Gehäuse (1) im Wesentlichen aus Metall, ggf. im Bodenbereich unterhalb des Innenbodens (4) aus Kunststoff, besteht, wobei das metallische Gehäuse (1) zumindest außen pulverbeschichtet bzw. pulverlackiert sein kann.

16. Grill nach einem der Ansprüche 1 bis 15, **dadurch gekennzeichnet, dass** die Trägerschale (2) und/oder die Holzkohlekammer (20) und/oder die Anzündschale (32) und/oder der Grillrost (3) aus Edelstahl hergestellt ist/sind.

## Claims

1. Barbecue having a housing (1), a carrier bowl (2) which is arranged inside the housing (1) with spacing relative to the housing (1) at all sides, a charcoal chamber (20) which is located in the carrier bowl (2), a barbecue rack (3) which is located above the charcoal chamber (20) and an air supply device which produces a flow of air which is directed into the charcoal chamber (20) from below the carrier bowl (2), **characterised in that** the charcoal chamber (20) is constructed in a substantially cylindrical manner and comprises a removable lid (24) which is perforated in the face thereof wherein the lid (24) is fixed by mechanical means in the position thereof which closes the charcoal chamber (20), that is to say, placed on the upper edge (22) of the charcoal chamber (20).

2. Barbecue according to claim 1, **characterised in that** the perforation of the lid (24) preferably has identical passages having a diameter in the range from 3 to 9 mm, preferably 6 mm, and/or **in that** the perforation comprises at least two hole groups (25) which are arranged in the manner of a circular ring, wherein the circular rings formed in this manner are arranged coaxially with respect to each other.

3. Barbecue according to either claim 1 or claim 2, **characterised in that** the lid (24) has at least two faces with different axial spacing with respect to the lid edge and **in that** the hole groups (25) are associated with the different faces, wherein downwardly angled or inclined transition faces could be formed between the faces and could be applicable at the edge region.

4. Barbecue according to any one of claims 1 to 3, **characterised in that** the lid (24) engages over or surrounds with the edge region thereof the charcoal chamber (20) in the upper region thereof, wherein the lid (24) could be pressed or impressed in the manner of a clip-fit closure on the upper edge region (22) of the charcoal chamber (20).

5. Barbecue according to any one of claims 1 to 4, **characterised in that** the lid (24) comprises an upper curved clamping member which preferably also acts as a handle (27) and which serves to secure the closed charcoal chamber (2) in a clamped manner between the base region of the carrier bowl (2) and the barbecue rack (3).

6. Barbecue according to any one of claims 1 to 5, **characterised in that** the base (34) of the charcoal chamber (20) is perforated, wherein the perforation comprises at least two hole groups (35) which are arranged in the manner of a circular ring in the same manner as with the lid (24), and wherein the circular rings which are formed in this manner are arranged coaxially with respect to each other, wherein the base (34) could be displaced at least slightly inwards over a free edge which protrudes beyond the base and wherein the edge could terminate with a peripheral, outwardly protruding flange, a projection, etcetera.

7. Barbecue according to any one of claims 1 to 6, **characterised in that** the lower edge and/or the upper edge of the charcoal chamber (20) is reinforced by means of folding, flanging, etcetera, and/or **in that** the wall of the charcoal chamber (20) is constructed as a peripheral, preferably fine-mesh sieve.

8. Barbecue according to any one of claims 1 to 7, **characterised in that** the charcoal chamber (20) is located with the lower edge (21) thereof in an ignition bowl (32), wherein the space between the base of the ignition bowl (32) and the base (34) of the charcoal chamber (20) is used for loading with a preferably paste-like auxiliary ignition means, wherein the ignition bowl (32) could comprise at least three downwardly protruding adjustment feet (33), with which it is located on the base of the carrier bowl (2) and wherein in the base region of the ignition bowl (32), preferably centrally, an air inlet (31) for introducing the air originating from the air supply device may be provided, wherein the air inlet (31) protrudes into the ignition bowl (32) preferably by means of a flange, edge or the like which protrudes upwards.

9. Barbecue according to any one of claims 1 to 8, **characterised in that** the air supply device comprises an air inlet pipe (31) which extends from below an inner base (4) which is formed in the housing (1) and which is preferably welded into the housing (1), through the base, the carrier shell (2) and the base of the ignition shell (32), and onto which the carrier shell (2) and the ignition shell (32) are fitted or pushed.

10. Barbecue according to any one of claims 1 to 9, **characterised in that** below the inner base (4), close to the inlet of the air inlet pipe (31), there is arranged a ventilator/fan (18) which blows air into the air inlet pipe (31) in a controlled manner, wherein the ventilator (18) is constructed so as to be miniaturised and to have little power consumption in a similar or identical manner to the ventilator in the housing of a computer, and wherein there could be provided for the operation of the ventilator (18) a control which adjusts down the ventilator (18) when an operating temperature which can preferably be detected above the barbecue rack (3) is reached.

11. Barbecue according to any one of claims 1 to 10, **characterised in that**, below the inner base (4) of the housing (1), a switch, a controller (30) and a battery compartment (29) for power supply for the fan (18) are arranged, wherein the switch and the controller (30) are located in the housing wall in order to be activated from the outer side, and wherein the battery compartment (29) is accessible from the outer side, preferably from below the housing (1).

12. Barbecue according to any one of claims 1 to 11, **characterised in that** the housing (1) in the region below the inner base (4) has openings which serve to supply air and which are preferably in the form of decorative passages, and/or **in that** the housing (1) has in the region above the inner base (4) openings which are used for cooling in the region between the housing (1) and the carrier bowl (2), preferably in the form of decorative passages.

13. Barbecue according to any one of claims 1 to 12, **characterised in that** the barbecue rack (3) comprises insertion feet (28) for positioning, in particular for insertion into openings in the upper edge of the carrier bowl (2) or in the housing (1), and/or **in that** the barbecue rack (3) in the edge region thereof, at least slightly above the actual barbecue face, has a peripheral railing (13) and/or **in that** the barbecue rack (3) can be secured to the housing edge in a clamping manner, preferably using clamping means and/or in that the barbecue rack (3) has a central closed, preferably undulating barbecue surface with a peripheral, outwardly declining drop edge, which is at least slightly larger in terms of diameter than the diameter of the charcoal chamber (20).

14. Barbecue according to any one of claims 1 to 13, **characterised in that** the carrier bowl (2) is suspended preferably with an at least partially peripheral edge region in the housing (1) and **in that** the base region of the carrier bowl (2) slopes down to an outer edge region and forms at that location a collection region for fat which drips down.

15. Barbecue according to any one of claims 1 to 14, **characterised in that** the housing (1) substantially comprises metal, where applicable plastics material in the base region below the inner base (4), wherein the metal housing (1) may be coated or painted with powder at least at the outer side.

16. Barbecue according to any one of claims 1 to 15, **characterised in that** the carrier shell (2) and/or the charcoal chamber (20) and/or the ignition shell (32) and/or the barbecue rack (3) is/are produced from high-grade steel.

## Revendications

1. Barbecue, comportant un carter (1), une coque de support (2) disposée à l'intérieur du carter (1) à distance du carter (1) sur tous les côtés, un réceptacle de charbon de bois (20) posé dans la coque de support (2), une grille (3) disposée au-dessus du réceptacle de charbon de bois (20) et un dispositif de fourniture d'air qui génère, depuis le dessous de la coque de support (2), un flux d'air dirigé dans le réceptacle de charbon de bois (20),
**caractérisé en ce que** le réceptacle de charbon de bois (20) est sensiblement cylindrique et comporte un couvercle (24) amovible, dont la surface est perforée, le couvercle (24), placé dans sa position de fermeture du réceptacle de charbon de bois (20), c'est-à-dire sur le bord supérieur (22) du réceptacle de charbon de bois (20) étant fixé par moyen mécanique.

2. Barbecue selon la revendication 1, **caractérisé en ce que** la perforation du couvercle (24) présente de préférence des trous identiques avec un diamètre dans la plage de 3 à 9 mm, de préférence 6 mm, et/ou **en ce que** la perforation comporte au moins deux groupes de trous (25) disposés en anneau de cercle, lesdits anneaux de cercle ainsi formés étant disposés coaxialement entre eux.

3. Barbecue selon l'une quelconque des revendications 1 à 2, **caractérisé en ce que** le couvercle (24) comporte au moins deux surfaces situées à une distance axiale différente par rapport au bord du couvercle, et **en ce que** les groupes de trous (25) sont associés aux différentes surfaces, des surfaces de transition, coudées vers le bas ou inclinées, pouvant être réalisées entre les surfaces et, le cas échéant, sur la zone du bord.

4. Barbecue selon l'une quelconque des revendications 1 à 3, **caractérisé en ce que** le couvercle (24) avec sa zone du bord entoure ou enserre par le haut le réceptacle de charbon de bois (20) dans sa partie supérieure, le couvercle (24) pouvant être poussé ou pressé dans le sens d'un système de fermeture embouti sur la zone du bord supérieur (22) du réceptacle de charbon de bois (20).

5. Barbecue selon l'une quelconque des revendications 1 à 4, **caractérisé en ce que** le couvercle (24) comporte un étrier de serrage supérieur, utilisé de préférence aussi comme anse (27), qui est destiné à immobiliser par serrage le réceptacle de charbon de bois (20) fermé entre la zone de fond de la coque de support (2) et la grille (3).

6. Barbecue selon l'une quelconque des revendications 1 à 5, **caractérisé en ce que** le fond (34) du réceptacle de charbon de bois (20) est perforé, la perforation comportant au moins deux groupes de trous (35) disposés en anneau de cercle, de manière similaire au couvercle (24), et les anneaux de cercle ainsi formés étant disposés coaxialement entre eux, le fond (34) pouvant être décalé au moins légèrement vers l'intérieur par l'intermédiaire d'un bord libre s'avançant au-delà du fond, et le bord pouvant se terminer par une collerette, une saillie, etc. périphérique, s'avançant vers l'extérieur.

7. Barbecue selon l'une quelconque des revendications 1 à 6, **caractérisé en ce que** le bord inférieur et/ou supérieur du réceptacle de charbon de bois (20) est renforcé par pliage, sertissage, etc. et/ou **en ce que** la paroi du réceptacle de charbon de bois (20) est réalisée sous la forme d'un tamis périphérique, de préférence à mailles fines.

8. Barbecue selon l'une quelconque des revendications 1 à 7, **caractérisé en ce que** le réceptacle de charbon de bois (20) est posé avec son bord (21) inférieur dans une coupelle d'allumage (32), l'espace entre le fond de la coupelle d'allumage (32) et le fond (34) du réceptacle de charbon de bois (20) étant destiné à recevoir un auxiliaire d'allumage de préférence pâteux, la coupelle d'allumage (32) pouvant comporter au moins trois pieds (33) en saillie vers le bas, par lesquels elle est posée sur le fond de la coque de support (2), et une entrée d'air (31) pouvant être prévue dans la zone du fond de la coupelle d'allumage (32), de préférence au milieu, pour injecter l'air provenant du dispositif de fourniture d'air, l'entrée d'air (31) s'engageant à l'intérieur de la coupelle d'allumage (32) de préférence au moyen d'un collerette, d'un bord ou élément similaire en saillie vers le haut à partir de la zone du fond.

9. Barbecue selon l'une quelconque des revendications 1 à 8, **caractérisé en ce que** le dispositif de fourniture d'air comporte un tube d'admission d'air (31) qui, depuis le dessous d'un fond intérieur (4) réalisé dans le carter (1), de préférence soudé dans le carter (1), mène à travers ledit fond intérieur, la coque de support (2) et le fond de la coupelle d'allumage (32) et sur lequel sont emmanchées ou enfichées la coque de support (2) et la coupelle d'allumage (32).

10. Barbecue selon l'une quelconque des revendications 1 à 9, **caractérisé en ce que**, en dessous du fond intérieur (4), à proximité de l'entrée du tube d'admission d'air (31), est disposé un ventilateur ou soufflante (18), qui insuffle de manière régulée l'air dans le tube d'admission d'air (31), ledit ventilateur (18) pouvant être miniaturisé et réalisé avec une faible consommation de courant, de manière similaire ou identique à un ventilateur dans le corps d'un ordinateur, et un dispositif de réglage pour le fonctionnement du ventilateur (18) pouvant être prévu, lequel règle vers le bas le ventilateur (18) lorsqu'il atteint une température de service détectable de préférence au-dessus de la grille (3).

11. Barbecue selon l'une quelconque des revendications 1 à 10, **caractérisé en ce que**, en dessous du fond intérieur (4) du carter (1), sont disposés un commutateur, un régulateur (30) et un compartiment pour piles (29) pour alimenter en courant le ventilateur (18), le commutateur et le régulateur (30) étant logés dans la paroi du carter afin d'être actionnés de l'extérieur, et le compartiment pour piles (29) étant accessible de l'extérieur, de préférence par le dessous du carter (1).

12. Barbecue selon l'une quelconque des revendications 1 à 11, **caractérisé en ce que** le carter (1), dans la zone en dessous du fond intérieur (4) comporte des orifices destinés à l'amenée d'air, de préférence sous la forme de percées décoratives, et/ou **en ce que** le carter (1), dans la zone au-dessus du fond intérieur (4) comporte des orifices utilisés pour le refroidissement dans la zone entre le carter (1) et la coque de support (2), de préférence sous la forme de percées décoratives.

13. Barbecue selon l'une quelconque des revendications 1 à 12, **caractérisé en ce que** la grille (3), en vue de son positionnement, comporte des pieds enfichables (28), destinés en particulier à être enfichés dans des orifices dans le bord supérieur de la coque de support (2) ou dans le carter (1), et/ou **en ce que** la grille (3), dans sa zone du bord, au moins légèrement au-dessus de la surface de cuisson proprement dite, comporte une rambarde (13) périphérique, et/ou **en ce que** la grille (3) peut être fixée par serrage sur le bord du carter, de préférence par des moyens de blocage, et/ou **en ce que** la grille (3) comporte une surface de cuisson centrale fermée, de préférence ondulée avec un bord anti-gouttes périphérique en saillie vers le bas, dont le diamètre est au moins légèrement supérieur au diamètre du réceptacle de charbon de bois (20).

14. Barbecue selon l'une quelconque des revendications 1 à 13, **caractérisé en ce que** la coque de support (2) est suspendue dans le carter (1), de préférence avec une zone du bord au moins partiellement périphérique, et **en ce que** la zone de fond de la coque de support (2) retombe en formant une zone de bord extérieure et y forme une zone de collecte pour la graisse tombant goutte à goutte.

15. Barbecue selon l'une quelconque des revendications 1 à 14, **caractérisé en ce que** le carter (1) est réalisé pour l'essentiel en métal, éventuellement en matière plastique dans la zone de fond au-dessous du fond intérieur (4), le carter (1) métallique pouvant être revêtu d'un revêtement en poudre ou peint avec une peinture en poudre, au moins à l'extérieur.

16. Barbecue selon l'une quelconque des revendications 1 à 15, **caractérisé en ce que** la coque de support (2) et/ou le réceptacle de charbon de bois (20) et/ou la coupelle d'allumage (32) et/ou la grille (3) est/sont réalisé(s) en acier inoxydable.
